# EUROPEAN PATENT APPLICATION

(11) **EP 4 137 612 A1**
(43) Date of publication of application: **22.02.2023**
(21) Application number: 22185210.6
(22) Date of filing: 15.07.2022
(51) Int. Cl.: C25D 11/04, C25D 11/16, F02B 23/08, F02F 1/24, F02F 3/10, F16J 1/00

(54) **PISTON FOR INTERNAL COMBUSTION ENGINE AND METHOD FOR MANUFACTURING THE SAME**

(30) Priority: 19.08.2021 JP 2021134054
(71) Applicant: Suzuki Motor Corporation, Hamamatsu-shi, Shizuoka 432-8611 (JP)
(72) Inventor: ISHIBASHI, Akira, HAMAMATSU-SHI, SHIZUOKA, 432-8611 (JP)
(74) Representative: Plasseraud IP

(57) **Abstract**

[Problem to be Solved] To provide a piston for an internal combustion engine that is excellent in both heat shielding performance and gas temperature followability, and can suppress cracks and peeling even in a situation in which a thermal shock is repeatedly applied to the piston during sudden acceleration or deceleration, and a method for manufacturing the piston.

[Solution] A piston crown surface 11 of a piston body made of aluminum alloy is irradiated with a laser to gradually increase an average particle size of eutectic Si in a surface of the piston crown surface from an intake side 5 to an exhaust side 6 of the piston crown surface by changing an irradiation output of the laser, and thereafter anodizing treatment is carried out on the piston crown surface to form an anodized film 12. As a result, a piston is obtained in which the film thickness of the anodized film 12 gradually increases from the intake side 5 to the exhaust side 6, the average particle size of the Si particles in the anodized film 12 and the average particle size of the eutectic Si immediately below the film in the piston crown surface gradually increase, and the proportion of acicular Si in the eutectic Si immediately below the film in the piston crown surface gradually increases.

## Description

### [Technical Field]

The present invention relates to a piston for an internal combustion engine, and to a method for manufacturing the same, and more particularly, relates to a piston for an internal combustion engine having an anodized film on a piston crown surface, and to a method for manufacturing the piston for an internal combustion engine.

### [Background Art]

In a case in which aluminum alloy is used in a component configuring a combustion chamber of an internal combustion engine or a part of a piston for an internal combustion engine, conventionally, a heat barrier film is formed on the surface of the aluminum alloy. The heat barrier film is composed of a substance and a structure with low thermal conductivity and low volume specific heat capacity, and suppresses heat conduction to the base material of aluminum alloy in the combustion cycle of the internal combustion engine, and the heat barrier film itself has a function of following changes in the ambient gas temperature. With this function, the difference ΔT between the wall surface of the combustion chamber including the piston crown surface and the gas temperature in the cylinder can be made smaller, so that the cooling loss can be improved by suppressing the outflow of heat energy to the outside, contributing to reduction in fuel consumption.

In addition, since the ability to follow changes in the ambient gas temperature depends on the heat capacity (= specific heat × density × volume) of the heat barrier film, if the substance and structure of the heat barrier film are uniform, the film thickness becomes dominant. In this case, the thicker the film thickness of the heat barrier film, the better the heat shielding performance, and the worse the gas temperature followability tends to be. In contrast, the thinner the film thickness of the heat barrier film, the lower the heat shielding performance, and the better the gas temperature followability tends to be. This suggests that the heat shielding performance and the gas temperature followability show a trade-off relationship and that either one of the performances should be prioritized in the specification of uniform film thickness.

For example, Patent Literature 1 describes that a compression ignition type engine in which a combustion chamber is defined by a cylinder block, a cylinder head, and a piston. An opening of an intake port is provided on one side of the central axis of the combustion chamber, and an opening of an exhaust port is located on the other side. A heat barrier layer is formed on the piston crown surface. In the heat barrier layer, the heat capacity of the exhaust-side heat barrier layer which is the side facing the opening of the exhaust port is set to be higher than the heat capacity of the intake-side heat barrier layer which is the side facing the opening of the intake port. A configuration in which the thickness of the intake-side heat barrier layer is less than the thickness of the exhaust-side heat barrier layer is described as a specific example.

Furthermore, for example, Patent Literature 2 describes an internal combustion engine that includes a combustion chamber composed of a bottom surface of a cylinder head, bottom surfaces of an intake valve of an intake port and an exhaust valve of an exhaust port provided in the cylinder head, a bore of a cylinder block, and a top surface of a piston sliding in the bore. A heat barrier film is formed on a part or all of a wall surface constituting the combustion chamber. An ignition plug is located between the intake piston and the exhaust piston on the bottom surface of the cylinder head and faces the combustion chamber. When the combustion chamber is divided into an intake valve side region and an exhaust valve side region by the ignition plug taken as the boundary, the heat insulating performance of at least a part of the heat barrier film on the wall surface of the intake valve side region is higher than that of the heat barrier film on the wall surface in at least the exhaust valve side region. A configuration in which the film thickness of the heat barrier film of the intake valve side region is thicker than that of the heat barrier film of the exhaust valve side region is described as a specific example.

### [Citation List]

### [Patent Literature]

[Patent Literature 1] JP 2019-124189 A
[Patent Literature 2] JP 2013-024143 A

### [Summary of Invention]

### [Problems to be Solved by the Invention]

However, in such a portion where the film thickness of the heat barrier layer or the heat barrier film on the piston crown surface is made thin, there is a problem that, when a heat shock (thermal shock) is repeatedly applied to the piston during sudden acceleration or deceleration, fine cracks may occur due to thermal fatigue. In particular, eutectic silicon in aluminum alloy is usually large in size and has an acicular metal structure, leading to a problem that cracks are likely to develop along the longitudinal direction.

Furthermore, when a heat barrier layer or film having a different film thickness is provided on the piston crown surface, a step having a different film thickness is formed at the boundary portion. In this situation, when the engine heat load, especially the thermal shock mentioned above is applied, there is a problem in that cracks and peeling may occur at the step portion due to the difference in the linear expansion coefficient, and the thermal deformation distribution of the piston crown surface. In particular, when the engine load is high, there is a problem that abnormal combustion, such as knocking, may occur frequently during combustion.

As a method for forming a heat barrier film having a different film thickness, Patent Literature 2 describes masking the exhaust valve side region of the piston crown surface, growing an alumite film in the intake valve side region to form an intake valve side heat barrier film, peeling the masking, masking the formed heat barrier film, and growing an alumite film in the exhaust valve side region to form an exhaust valve side heat barrier film. However, such a method has a problem that the formation of a step at the boundary portion having a different film thickness is inevitable.

Therefore, in view of the above problems, an object of the present invention to provide an internal combustion engine piston that is excellent in both heat shielding performance and gas temperature followability, and can suppress cracks and peeling even in a situation in which a thermal shock is repeatedly applied to the piston during sudden acceleration or deceleration, and a method for manufacturing the internal combustion engine piston.

### [Means for Solving the Problems]

In order to achieve the object described above, the present invention is, in one aspect, an internal combustion engine piston, including a piston body having a piston crown surface and made of aluminum alloy, and an anodized film covering the piston crown surface and containing silicon particles, characterized in that a film thickness of the anodized film gradually increases from an intake side to an exhaust side of the piston crown surface, an average particle size of the silicon particles in the anodized film and an average particle size of eutectic silicon immediately below the anodized film in the piston crown surface gradually increase from the intake side to the exhaust side of the piston crown surface, and a proportion of acicular silicon in the eutectic silicon immediately below the anodized film in the piston crown surface gradually increases from the intake side to the exhaust side of the piston crown surface.

In addition, another aspect of the present invention is a method for manufacturing an internal combustion engine piston, including a step of irradiating a piston crown surface of a piston body made of aluminum alloy with a laser to gradually increase an average particle size of eutectic silicon in a surface of the piston crown surface from an intake side to an exhaust side of the piston crown surface by changing an irradiation output of the laser and, a step of carrying anodizing treatment on the irradiated piston crown surface to form an anodized film.

### [Advantageous Effects of Invention]

As described above, according to the present invention, since the film thickness of the anodized film, which is the heat barrier film, gradually increases from the intake side to the exhaust side of the piston crown surface, and the average particle size of the silicon particles in the anodized film and the average particle size of eutectic silicon immediately below the anodized film in the piston crown surface gradually increase from the intake side to the exhaust side of the piston crown surface, excellent heat shielding performance and gas temperature followability are achieved, and cracks and peeling can be suppressed even in a situation in which a thermal shock is repeatedly applied to the piston.

### [Brief Description of Drawings]

[Figure 1] Figure 1 is a schematic diagram of an internal combustion engine, explaining an embodiment of a method for manufacturing an internal combustion engine piston according to the present invention.
[Figure 2] Figure 2 is a plan view showing an anodized film formed on a piston crown surface of the internal combustion engine piston shown in Figure 1.
[Figure 3] Figure 3 is a graph showing changes in the average particle size of eutectic silicon in aluminum alloy with respect to the position of the piston crown surface.
[Figure 4] Figure 4 is a graph showing changes in the proportion of acicular silicon in eutectic silicon in the aluminum alloy with respect to the position of the piston crown surface.
[Figure 5] Figure 5 is a graph showing changes in thermal conductivity of the piston crown surface with respect to the position of the piston crown surface.
[Figure 6] Figure 6 is a graph showing the relationship between a laser output and the average particle size of the eutectic silicon in the aluminum alloy in an example and a comparative example.
[Figure 7] Figure 7 is a graph showing the relationship between the average particle size of the eutectic silicon in the aluminum alloy and the film thickness of the anodized film in the example and the comparative example.

### [Mode for Carrying Out the Invention]

An embodiment of the internal combustion engine piston and a method for manufacturing the same according to the present invention is now described hereinafter with reference to the accompanying drawings. The following embodiment applies to a case in which an internal combustion engine is a gasoline engine, but the present invention is not limited thereto; the internal combustion engine may be a diesel engine.

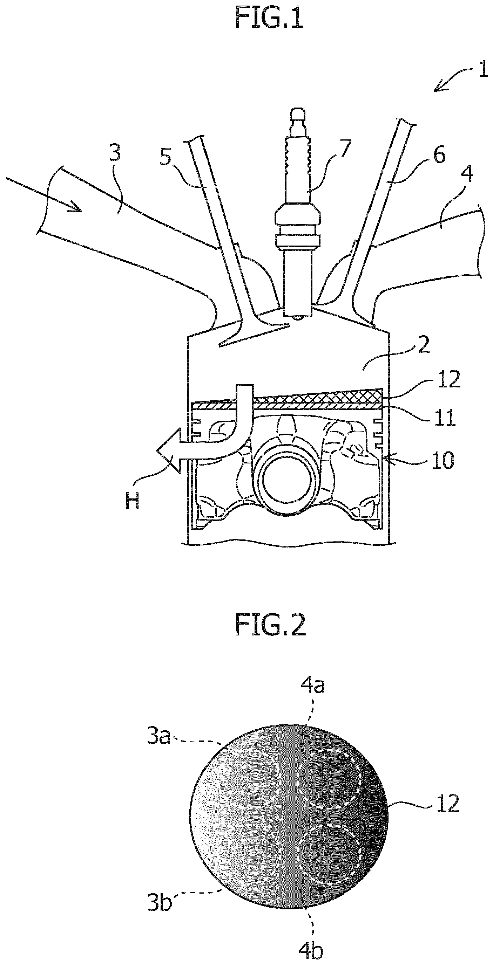

As shown in Figure 1, a piston 10 for an internal combustion engine of the present embodiment is a component constituting an internal combustion engine 1. A combustion chamber 2 of the internal combustion engine 1 is defined by a cylinder block (not shown), a cylinder head (not shown), and the internal combustion engine piston 10. The internal combustion engine 1 includes intake ports 3 and exhaust ports 4 that open to the combustion chamber 2. The intake port 3 is provided with an intake valve 5 that can be raised and lowered to open and close an opening of the intake port 3, and the exhaust port 4 is provided with an exhaust valve 6 that can be raised and lowered to open and close an opening of the exhaust port 4. Two intake ports 3 are provided apart from each other in a crankshaft direction (direction perpendicular to the paper surface in Figure 1). Similarly, two exhaust ports 4 are provided apart from each other in the crankshaft direction. A fuel injection valve 7 is disposed at the center of these ports.

A body of the internal combustion engine piston 10 is made of an aluminum alloy material, and the aluminum alloy material generally contains silicon (Si) as a component that contributes to wear resistance and aluminum adhesion resistance. Examples of such aluminum alloy material include, for the piston, AC materials such as AC4, AC8, AC8A, and AC9, ADC materials such as ADC10 to ADC14, and A4000.

An anodized film 12 is formed as a heat barrier film on the surface of the internal combustion engine piston 10 on the combustion chamber 2 side, that is, a piston crown surface 11. As shown in Figure 1, the film thickness of the anodized film 12 gradually increases from the intake side where the intake ports 3 are located to the exhaust side where the exhaust ports 4 are located.

In addition, in Figure 2 in which the anodized film 12 is viewed from the combustion chamber 2 side, the difference in the film thickness of the anodized film 12 is shown by color intensity. The thicker the film thickness, the darker the color. Also, positions 3a and 3b of the openings of the intake ports 3 opened to the combustion chamber 2 and positions 4a and 4b of the openings of the exhaust ports 4 opened to the combustion chamber 2 are shown by broken lines. As shown in Figure 2, the film thickness of the anodized film 12 gradually increases from the intake side where the intake port openings 3a and 3b are located to the exhaust side where the exhaust port openings 4a and 4b are located. In other words, the film thickness of the anodized film 12 gradually decreases from the exhaust side to the intake side.

The anodized film 12 is porous, and the volume specific heat capacity can be further lowered by reducing the film thickness of the anodized film 12, so that the surface temperature of the anodized film 12 can follow temperature changes of gas in the combustion chamber 2, with a smaller time delay and a smaller temperature difference. On the intake side of the combustion chamber 2 where the intake ports 3 are located, an in-cylinder gas temperature is lowered by the introduction of fresh air into the combustion chamber 2, and as a consequence, the surface temperature of the anodized film 12 becomes low. Therefore, by reducing the film thickness of the anodized film 12 on the intake side, the volumetric efficiency can be enhanced and the engine output can be improved.

On the other hand, since the in-cylinder gas temperature is usually higher on the exhaust side of the combustion chamber 2 where the exhaust ports 4 are located, than on the intake side of the combustion chamber 2 where the intake ports 3 are located, by increasing the film thickness of the anodized film 12 on the exhaust side, the volume specific heat capacity can be increased, the heat shielding performance can be enhanced, and consequently, the cooling loss of the piston can be suppressed.

Since the film thickness of the anodized film 12 gradually changes, there is no step at the boundary between the thick portion of film thickness and the thin portion of film thickness, and the anodized film 12 has a shape that is inclined from an intake side end to an exhaust side end of the piston crown surface 11. Therefore, since there is no starting point where cracks or peeling can occur, the occurrence of cracks or peeling can be suppressed even when a thermal shock is repeatedly applied to the piston such as during sudden acceleration or deceleration and abnormal combustion such as knocking in which the engine load is high can be suppressed.

As shown in Figure 1, from the perspective of suppressing turbulence in the combustion chamber, the film thickness of the anodized film 12 preferably changes gradually linearly, that is, in a linear function proportional to the distance between the intake side and the exhaust side of the piston crown surface. However, the present invention is not limited thereto, and the film thickness of the anodized film 12 may gradually change in a curve, such as, for example, in a convex curve bulging toward the combustion chamber 2 side or in a concave shape recessed toward the combustion chamber 2 side.

The film thickness of the anodized film 12 on the intake side may be thinner than the film thickness of the same on the exhaust side, but from the perspective of output performance, for example, the film thickness on the intake side is preferably 0.25 or less, more preferably 0.1 or less, and even more preferably 0.05 or less, as a relative value when the film thickness on the exhaust side is 1. The lower limit of the relative value of the film thickness is not particularly limited, but is preferably 0.005 or more, and more preferably 0.01 or more. Furthermore, specifically, the film thickness of the anodized film 12 on the exhaust side is preferably, for example, in the range of 4 to 100 µm, and more preferably in the range of 25 to 75 µm, from the perspective of achieving both heat shielding performance and reliability. Specifically, the film thickness of the anodized film 12 on the intake side is preferably in the range of 0.5 to 5.0 µm, and more preferably in the range of 1.0 to 2.5 µm, from the perspective of suppressing overheating in the combustion chamber.

In addition, in the aluminum alloy of the body of the internal combustion engine piston 10, silicon (Si) is crystallized as eutectic silicon. In the piston crown surface 11 of the internal combustion engine piston 10 of the present embodiment, the average particle size of the eutectic silicon immediately below the anodized film 12 gradually increases from the intake side where the intake ports 3 are located to the exhaust side where the exhaust ports 4 are located. In other words, the average particle size of the eutectic silicon immediately below the anodized film 12 in the piston crown surface 11 of the internal combustion engine piston 10 gradually decreases from the exhaust side to the intake side.

In particular, the eutectic silicon in aluminum alloy often exists in the form of acicular silicon, but since such acicular silicon is spheroidized in the piston crown surface 11 of the internal combustion engine piston 10 of the present embodiment, the average particle size of the eutectic silicon is reduced. Therefore, the proportion of the acicular silicon in the eutectic silicon immediately below the anodized film in the piston crown surface gradually increases from the intake side to the exhaust side of the piston crown surface. In other words, the proportion of acicular silicon in the eutectic silicon gradually decreases from the exhaust side to the intake side of the piston crown surface. The acicular silicon refers to silicon in which the aspect ratio (ratio between width and length) is 2 or more.

Even in the anodized film 12 formed on the piston crown surface 11, the average particle size of the silicon particles in the anodized film 12 gradually increases from the intake side where the intake ports 3 are located to the exhaust side where the exhaust ports 4 are located. In other words, the average particle size of the silicon particles in the anodized film 12 gradually decreases from the exhaust side to the intake side. This is because the anodized film 12 is formed by oxidizing the surface of the aluminum alloy and grows while encapsulating the silicon of the aluminum alloy, so an anodized film containing silicon particles having a small average particle size is formed in the portion of the piston crown surface where the average particle size of the eutectic silicon is small, and an anodized film containing silicon particles having a large average particle size is formed in the portion of the piston crown surface where the average particle size of the eutectic silicon is large.

Since the average particle size of the eutectic silicon in the piston crown surface 11 on the side where the film thickness of the anodized film 12 is thinned is reduced, and the proportion of acicular silicon is reduced as described above, even when a thermal shock is repeatedly applied to the portion where the film thickness of the anodized film 12 is thinned during sudden acceleration or deceleration or the like, the progress of cracks or peeling associated with the size and shape of the acicular silicon can be suppressed.

Furthermore, when the acicular silicon contained in the aluminum alloy is spheroidized, the thermal resistance of the aluminum alloy drops, and as a result, the thermal conductivity improves. Therefore, the thermal conductivity of the piston crown surface 11 immediately below the anodized film 12 gradually increases from the exhaust side where the exhaust ports 4 are located to the intake side where the intake ports 3 are located. On the intake side where the thickness of the anodized film 12 is thin, the heat received from the combustion chamber 2 is large, but since the thermal conductivity of the piston crown surface 11 on the intake side is high, heat can be efficiently dissipated to a cylinder wall surface on the intake side via a piston ring or skirt as shown by arrow H of Figure 1, thereby slowing down the temperature rise of the internal combustion engine piston 10.

If the temperature rise is drastic, the temperature of a piston base material and a base material on the top ring groove side may become high, and the base material may become soft, whereby the smoothness of the top ring groove may be impaired. When the smoothness is impaired, the sealability between the piston ring and the top ring groove deteriorates, causing a phenomenon in which oil used for lubrication of the internal combustion engine flows into the combustion chamber side (oil rise), and the oil may burn in the combustion chamber, contributing to the generation of substances subject to European environmental regulations, such as PM (Particulate Matter), and an increase in the number of such substances, i.e., PN (Particle Number). Therefore, in the present embodiment, since the temperature rise of the internal combustion engine piston 10 can be slowed down, it is possible to suppress the generation of substances subject to European environmental regulations such as PM and PN and the increase in the number of these substances.

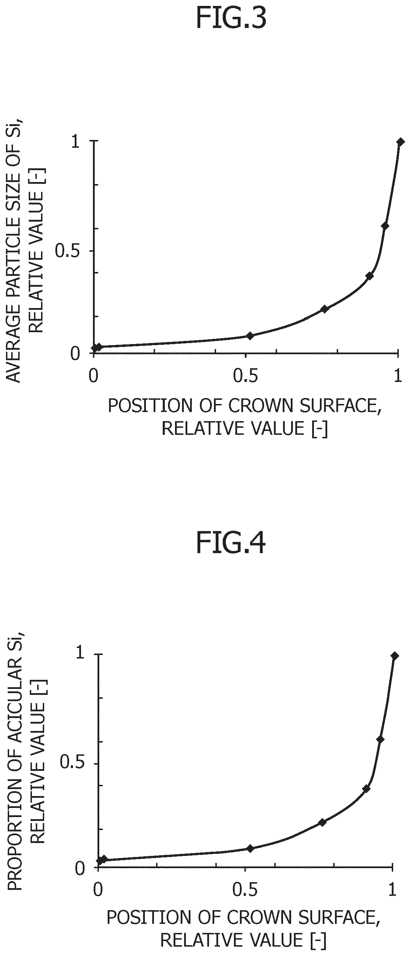

In particular, as shown in the graph in Figure 3, the gradual change in the average particle size of the eutectic silicon (Si) immediately below the anodized film 12 in the piston crown surface 11 preferably becomes large in a concave curve, from the intake side end of the piston crown surface 11 (position of 0 on the x-axis in Figure 3) to the intake side end (position of 1 on the x-axis in Figure 3). Note that the average particle size of the eutectic silicon shown on the y-axis in Figure 3 is represented by a relative value when the maximum average particle size is 1. Furthermore, "large in a concave curve" includes, for example, being large quadratically, exponentially, or in a concave elliptical arc. Figure 3 shows a case in which the average particle size increases quadratically.

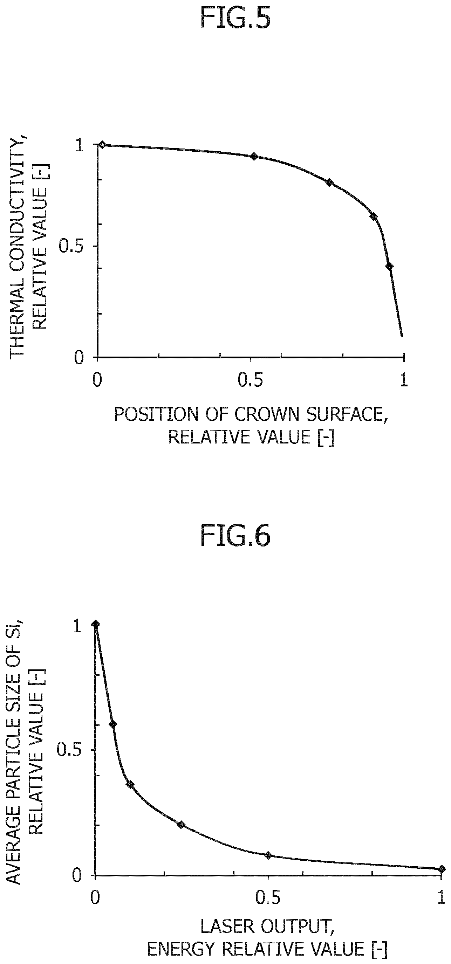

Figure 4 shows changes in the proportion of acicular silicon in the eutectic silicon in a case in which the average particle size of the eutectic silicon changes as shown in Figure 3, and Figure 5 shows changes in thermal conductivity in the same case. Note that, as with Figure 3, the x-axis in Figures 4 and 5 represents the position of the piston crown surface as a relative value when the intake side end is 0 and the exhaust side end is 1. The proportion of acicular silicon shown on the y-axis in Figure 4 is represented by a relative value when the maximum proportion is 1. The thermal conductivity shown on the y-axis in Figure 5 is represented by a relative value when the maximum thermal conductivity is 1.

As described above, refining the eutectic silicon causes the acicular silicon to become spherical, which improves the thermal conductivity of the aluminum alloy. Therefore, as shown in Figure 4, the proportion of the acicular silicon in the eutectic silicon increases in a concave curve from the intake side of the piston crown surface 11 to the intake side, and as shown in Figure 5, the thermal conductivity decreases in a convex curve from the intake side of the piston crown surface 11 to the intake side. By increasing the average particle size of the eutectic silicon from the intake side to the intake side in a concave curve as described above, the thermal conductivity can be significantly improved in a wide region of the piston crown surface 11 on the intake side. Therefore, as described above, the effect of releasing the heat received by the piston 10 on the intake side where the thickness of the anodized film 12 is thin to the cylinder wall surface on the intake side to slow down the temperature rise of the piston 10 can be further enhanced.

The average particle size of the eutectic silicon on the intake side may be smaller than the average particle size of the same on the exhaust side. However, from the perspective of achieving both growth stability of the film thickness and thermal properties of the material, the average particle size is preferably 0.1 or less, more preferably 0.025 or less, and even more preferably 0.01 or less, as a relative value when the average particle size on the exhaust side is 1. The lower limit of the relative value of the average particle size is not particularly limited, but is preferably 0.001 or more, and more preferably 0.005 or more.

The proportion of acicular silicon in the eutectic silicon may be lower on the intake side than on the exhaust side, but from the perspective of the thermal properties of the material, for example, the proportion on the intake side is preferably 0.1 or less, more preferably 0.05 or less, and even more preferably 0.01 or less, as a relative value when the proportion on the exhaust side is 1. The lower limit of the relative value of the proportion of the acicular silicon is not particularly limited, but is preferably 0.001 or more, and more preferably 0.005 or more.

The thermal conductivity of the surface of the piston crown surface 11 may be higher on the intake side than on the exhaust side, but from the perspective of output performance, for example, the thermal conductivity is preferably 0.5 or less, more preferably 0.25 or less, and even more preferably 0.1 or less, as a relative value when the thermal conductivity on the intake side is 1. The lower limit of the relative value of the thermal conductivity is not particularly limited, but is preferably 0.01 or more, and more preferably 0.05 or more.

Next, the method for manufacturing the internal combustion engine piston according to the present embodiment will be described. This method includes a laser irradiation step of irradiating a piston crown surface of an internal combustion engine piston body made of aluminum alloy with a laser, and an anodizing treatment step of forming an anodized film on the piston crown surface irradiated with the laser. Each of the foregoing steps is described hereinafter in more detail.

### [Laser Radiation Step]

The laser that is radiated onto the piston crown surface is not particularly limited as long as it is a laser for metal processing, and for example, a CO2 laser, a YAG laser, a fiber laser, or the like can be used alone or in combination thereof. By irradiating the piston crown surface of the aluminum alloy material with a laser, the aluminum alloy in the part irradiated with the laser can be locally heated, melted, and then cooled to refine the eutectic silicon in the aluminum alloy. The higher irradiation output of the laser, the smaller the particle size of the finely refined eutectic silicon. Furthermore, the eutectic silicon includes a large amount of acicular silicon having an acicular metal structure, and the acicular silicon becomes spherical by refining the eutectic silicon. The proportion of the acicular silicon in the eutectic silicon decreases as the laser irradiation output increases.

Therefore, when scanning the piston crown surface with the laser, the irradiation output of the laser is gradually reduced from the intake side to the exhaust side, so that the average particle size of the eutectic silicon existing on the surface in the piston crown surface can be gradually increased from the intake side to the exhaust side. Alternatively, by gradually increasing the laser irradiation output from the exhaust side to the intake side, the average particle size of the eutectic silicon existing on the surface in the piston crown surface can be gradually reduced from the exhaust side to the intake side. A spot-shaped or sheet-shaped pulse laser may be used for laser scanning. For example, when scanning the entire surface of the piston crown surface with a spot-shaped pulse laser, the laser needs to be moved repeatedly from one end to the other end of the piston crown surface, but a sheet-shaped pulse laser only needs to be moved once from one end to the other.

### [Anodizing Treatment Step]

The piston crown surface irradiated with such a laser is subjected to anodizing treatment to form an anodized film on the piston crown surface. In the anodizing treatment step, a conventional anodizing treatment capable of forming an anodized film on the surface of the aluminum alloy can be widely adopted. For example, in an acidic treatment bath such as sulfuric acid, oxalic acid, phosphoric acid, chromium acid, or in a basic treatment bath such as sodium hydroxide, sodium phosphate, or sodium fluoride, an electrode plate having titanium or carbon as a cathode and the piston crown surface of the internal combustion engine piston body as an anode are immersed and decomposed by electrolysis, to oxidize the aluminum alloy material on the surface of the piston crown surface, thereby forming the anodized film.

As the electrolytic method, there are generally a DC electrolytic method, an AC/DC superposition electrolytic method, and the like, and any of them can be adopted, but it is preferable to use the AC/DC superposition electrolytic method. The AC/DC superposition electrolytic method is a method of performing anodizing treatment by repeating a step of applying a positive voltage to the aluminum alloy material to be subjected to electrolytic treatment and a step of removing electric charges from the aluminum alloy material. When performing anodizing treatment by the AC/DC superposition electrolytic method, since the anodized film (AC/DC superposed electrolytic film) formed by the AC/DC superposition electrolytic method grows in random directions with respect to the surface of the aluminum alloy material and does not have orientation, the anodized film grows while encapsulating silicon contained in the aluminum alloy material to be subjected to electrolytic treatment, while branching in random directions. Therefore, an anodized film having a dense and smooth surface can be formed.

The DC electrolytic method is a method of performing anodizing treatment by applying a certain level of DC voltage to the aluminum alloy material to be subjected to electrolytic treatment. When performing anodizing treatment by the DC electrolytic method, an anodized film formed by the DC electrolytic method grows in a direction perpendicular to the surface of the aluminum alloy material. In the DC electrolytic method, the growth of the anodized film is inhibited by the eutectic silicon contained in the aluminum alloy material to be subjected to electrolytic treatment. Therefore, the roughness of the surface of the film formed by the DC electrolytic method is greater than that of the film formed by the AC/DC superposition electrolytic method. However, even such an anodized film can be adopted in the internal combustion engine piston of the present invention.

In such anodizing treatment, the finer the particle size of the eutectic silicon in the aluminum alloy, the slower the film forming speed of the anodized film. Therefore, when the conditions of the anodizing treatment are the same, the film thickness of the anodized film to be formed in the aluminum alloy part where the average particle size of the eutectic silicon is small is thinner than that in the aluminum alloy part where the average particle size of the eutectic silicon is large. Therefore, in the laser irradiation step, the laser irradiation output, when irradiating the piston crown surface with the laser, is gradually changed, and the average particle size of the eutectic silicon existing on the surface in the piston crown surface is gradually increased from the intake side to the exhaust side. In this manner, it is possible to manufacture an internal combustion engine piston having an anodized film formed on the piston crown surface, the anodized film being gradually thickened from the intake side to the exhaust side by the anodizing treatment step.

### Examples

Hereinafter, an example and a comparative example of the present invention will be described. First, a test piece (dimensions: diameter 64 mm) made of aluminum alloy (type: AC8A-T6) was prepared, degreased and washed with acid (oxide film removal), and then, using a laser processing machine, the surface of the test piece was irradiated with a laser. Then, the laser irradiation output was changed, and the laser irradiation was performed on a plurality of test pieces.

For each test piece subjected to laser irradiation as described above, the average particle size of eutectic silicon in the aluminum alloy of the laser-irradiated portion was measured using an electron scanning microscope. For comparison, the average particle size of eutectic silicon was also measured for the test pieces not irradiated with the laser. These results are shown in Figure 6. As for the average particle size, a field size of 50 × 50 µm was digitally photographed at a magnification of 1000 times, one eutectic silicon was calculated by the diameter equivalent to a circle, and the average value in the field of view was used to calculate the average particle size.

Figure 6 shows changes in the average particle size of the eutectic silicon (Si) in the aluminum alloy with respect to the laser output. The laser output was represented by a relative value, with the maximum laser output as 1. The average particle size was expressed as a relative value, with the average particle size of the test piece of the comparative example not irradiated with the laser as 1. As shown in Figure 6, it was found that the average particle size of the eutectic silicon decreased as the laser irradiation output increased. It was found that the average particle size of the eutectic silicon can be easily set to 0.4 or less or 0.2 or less as a relative value to the initial average particle size with a certain irradiation output.

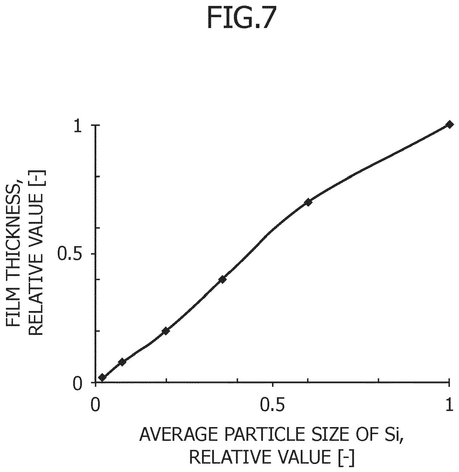

Next, each test piece irradiated with the laser as described above was immersed in a sulfuric acid bath and energized until a desired film thickness was obtained, to perform anodizing treatment. Then, the film thickness of the anodized film formed on these test pieces was measured using an eddy current type film thickness measuring device (manufactured by Fisher Instruments, model number: MMS PC2). These results are shown in Figure 7.

Figure 7 shows changes in the film thickness of the anodized film with respect to the average particle size of the eutectic silicon (Si) in the aluminum alloy. The average particle size was represented by the same relative value as in Figure 4. The film thickness was represented by a relative value, with the film thickness of the anodized film of the test piece of the comparative example not irradiated with the laser as 1. As shown in Figure 7, it was found that the smaller the average particle size of the eutectic silicon in the aluminum alloy, the thinner the film thickness of the anodized film formed on the eutectic silicon. It was found that, by changing the average particle size of the eutectic silicon, the film thickness of the anodized film formed by anodizing treatment under the same conditions can be easily set to 0.4 or less or 0.2 or less as a relative value to the maximum film thickness.

### [Reference Signs List]

- 1: Internal combustion engine
- 2: Combustion chamber
- 3: Intake port
- 4: Exhaust port
- 5: Intake valve
- 6: Exhaust valve
- 7: Fuel injection valve
- 10: Internal combustion engine piston
- 11: Piston crown surface
- 12: Anodized film

## Claims

1. A piston for an internal combustion engine, comprising:
a piston body having a piston crown surface and made of aluminum alloy; and
an anodized film covering the piston crown surface and containing silicon particles,
**characterized in that** a film thickness of the anodized film gradually increases from an intake side to an exhaust side of the piston crown surface,
an average particle size of the silicon particles in the anodized film and an average particle size of eutectic silicon immediately below the anodized film in the piston crown surface gradually increase from the intake side to the exhaust side of the piston crown surface, and
a proportion of acicular silicon in the eutectic silicon immediately below the anodized film in the piston crown surface gradually increases from the intake side to the exhaust side of the piston crown surface.

2. The internal combustion engine piston as claimed in claim 1, **characterized in that** an average particle size of Si particles in the anodized film and an average particle size of Si particles immediately below the anodized film in the piston crown surface increase in a concave curve from the intake side to the exhaust side of the piston crown surface.

3. A method for manufacturing a piston for an internal combustion engine, comprising the steps of:
irradiating a piston crown surface of a piston body made of aluminum alloy with a laser to gradually increase an average particle size of eutectic silicon in a surface of the piston crown surface from an intake side to an exhaust side of the piston crown surface by changing an irradiation output of the laser; and
carrying out an anodizing treatment on the irradiated piston crown surface to form an anodized film.
